# EUROPEAN PATENT APPLICATION

(11) **EP 3 200 400 A1**
(43) Date of publication of application: **02.08.2017**
(21) Application number: 17153375.5
(22) Date of filing: 26.01.2017
(51) Int. Cl.: H04L 12/28, H04W 4/00

(54) **APPARATUS FOR CONTROLLING A SYSTEM FOR MANAGING A SERVICE FOR A ROOM TO BE CONTROLLED, WHICH CAN BE OCCUPIED BY ONE USER**

(30) Priority: 29.01.2016 IT UB20160270
(71) Applicant: Idea S.p.A., 37049 Villa Bartolomea (Verona) (IT)
(72) Inventor: GIORDANO, Bruno, 37049 Verona (IT); RENOFFIO, Nicola Francesco, 37045 Verona (IT)
(74) Representative: Anselmi, Davide

(57) **Abstract**

An apparatus (1) for controlling a system (1) for managing a service for a room (5) to be controlled, which can be occupied by at least one user, and comprising a control unit (6), which, in use, is connected to the system (2) for managing the service and configured to generate a signal (7) for activating or deactivating one or more services. Furthermore, the apparatus (1) comprises a mobile signalling device (10) that can be associated with a user for generating and intermittently transmitting a wireless warning signal (12) within a predetermined range of distance from the mobile device (10), and a detector unit (13) for detecting the wireless warning signal (12), said unit (13) being operatively connected to the control unit (6) so that the control unit can generate the activation or deactivation signal (7) as a function of the presence of the user.

## Description

The object of the present invention is an apparatus for controlling a system for managing the heating/cooling and/or the electrical system of a building. In particular, the present invention pertains to the sector of home automation of services in an indoor room, including heating/cooling, lighting, switching on appliances, activating/deactivating an alarm system, access control, etc.

In fact, it should be noted that "electrical system control" is understood as the control of any device (e.g. a lightbulb, an appliance, etc.) or system (e.g. alarm system, video surveillance, etc.) that is connected and/or powered by the electrical system.

Preferably, but not exclusively, the invention is applied in the sector of thermostats as control apparatuses for controlling the heating/cooling of at least one living space of a user.

In accordance with the prior art, there are basically two types of thermostats:
"simple" thermostats that make it possible to activate or deactivate the heating/cooling system when the temperature detected in the room is higher or lower than a threshold preset by the user;
chronothermostats that make it possible to program the activation/deactivation of the system over time (for example daily or weekly) and also based on the temperature detected in the room being higher or lower than one or more thresholds preset by the user.

As concerns chronothermostats, it commonly occurs that the daily or weekly scheduling preset by the user is not perfectly accurate and above all efficient in terms of energy consumption levels (gas for heating) because the user is not always aware of the system's response times.

In view of this, chronothermostats that have a user presence sensor are currently available on the market. In this manner, when the sensor detects the presence or absence of the user, it "self-regulates" intelligently and establishes the daily or weekly scheduling for managing the heating/cooling system as a function of the presence of the user in the home and the characteristics of the system. In other words, this "self-regulation" based on the characteristics of the system is linked to an algorithm of the system that constantly records the operating dynamics and particularly the heating/cooling timing of one or more rooms (thanks to its "self-learning" feature and anticipatory regulation of the system itself) so as to obtain the level of comfort desired in the actual periods of presence in the room or in the scheduled periods.

An example of this prior art is disclosed in patent EP1496650.

However, this prior art also has several drawbacks.

In particular, the drawbacks principally concern the presence sensor, which is usually a PIR or similar sensor and which must be positioned in proximity to the entrance area of an apartment so as to detect the passage of a user. However, electrical connections with the system are not always available in this entrance area and therefore changes in the connections must be made.

Moreover, a further drawback relates to the fact that the detection sensor often has problems managing the entrance of more than one person in the same room or the entrance or exiting of one person or persons leaving the apartment close together.

Furthermore, sensors of the "PIR" type are often unable to discern the presence of pets and therefore much more sophisticated sensors must be used.

In this context, the aim of the present invention is to realize an apparatus for controlling a system for managing a service for a room which can overcome the cited drawbacks.

A particular aim of the present invention is to realize an apparatus for controlling a system that makes it possible to increase the accuracy of the detection of the presence of the user in the room.

A further aim of the invention is to realize an apparatus for controlling a system which makes it possible to discern movement away from the room as a function of the distance therefrom.

The aims indicated above are substantially achieved by an apparatus for controlling a system according to that which is disclosed in the appended claims.

Further characteristics and advantages of the present invention will become more apparent from the detailed description of several preferred, but not exclusive, embodiments of an apparatus for controlling a system, as illustrated in the accompanying drawings, of which:
- Figure 1 is a schematic view of an apparatus for controlling a system, said apparatus being installed in a room as defined in the present invention; and
- Figure 2 is a schematic view of an example of the connection of a control apparatus according to the present invention to a data network. With reference to the figures cited, an apparatus for controlling a system 2 according to the present invention is indicated in its entirety by reference number 1.

In particular, the control apparatus 1 is preferably installed in an indoor room 5 such as a room in an apartment, in a building, etc.

The control apparatus 1 comprises a control unit 6, which, in use, is connected to the system 2 for managing the service and configured to generate a signal 7 for activating or deactivating one or more services. The term "service" indicates heating, cooling, lighting, the switching on of electronic equipment, etc.

It should be understood that the apparatus 1 is configured to act upon a system 2 that also operates in rooms other than the one in which the apparatus 1 is installed. For example, the apparatus 1 could be installed in a space (e.g. a room in a house) and could control the system 2 for heating/cooling the entire home.

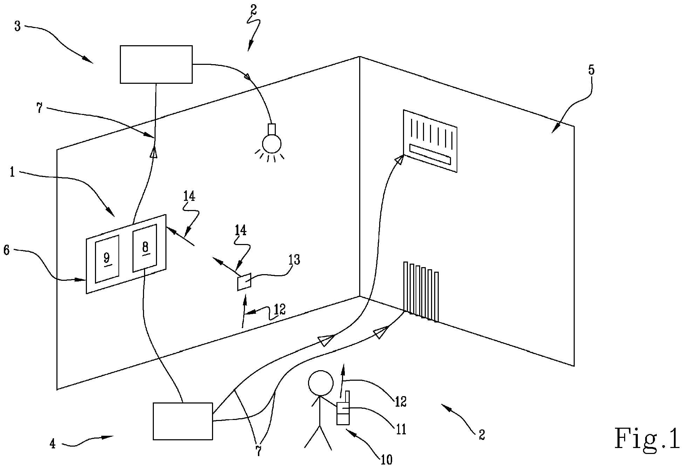

Solely by way of example, it can be seen in Figure 1 that the control unit 6 is secured to a fixed point in the room 5 (for example connected to a wall, etc.). In any case, the control unit 6 does not have to be installed on a wall or fixed point in the room 5.

As described more fully below, the control unit 6 comprises a thermostat 8 and/or a unit 9 for managing the electric current. In other words, the control unit 6 is in charge of managing the heating system 2 and the electrical system 5 for the reference room 5 or other rooms in which the system operates.

It should be noted that the control unit 6 comprises a memory unit 17 in which the data for activating or deactivating one or more services are stored (for example when to switch the heating or cooling system on or off). The contents of said signal 7 for activating or deactivating one or more services are a function of said data previously stored in the memory unit 17.In other words, the contents of the signal 7 are representative of the data stored in the memory unit 17.For example, the contents of the signal 7 concern when to switch a service on or off, as indicated in the data previously stored in the memory unit 17.

In accordance with the present invention, a mobile signalling device 10 that can be associated with a user is associated with the apparatus 1 (or it can be a part thereof). In other words, the mobile signalling device 10 is kept by the user and moves with the user (moving for example outside/inside the home, at work, other places).

The mobile device 10 comprises a module 11 for generating and intermittently transmitting a wireless warning signal 12 within a predetermined range of distance from the mobile device 10. In other words, the module 11 for generating and transmitting the warning signal 12 is configured to generate an intermittent warning signal 12 of a preestablished period (e.g. 10 signals per second) and to transmit it to a predetermined distance (e.g. 50 to 100 metres).

It should be noted that the mobile device 10 also comprises a battery for supplying power to the module 11 for generating and transmitting the warning signal 12.

The mobile device 10 is preferably a beacon and it utilizes a Bluetooth® transmission protocol for transmission of the warning signal 12, and even more preferably Bluetooth® Low Energy (BLE or Bluetooth®Smart or Bluetooth®). The beacon devices are currently known in the state of the art and shall not be discussed in further detail herein.

Preferably, the beacon for the present invention could be in the form of a keychain, a wristband or sticker to be attached to an article of clothing or a watch or in general something that can be worn by the user in the simplest and least invasive manner possible (so that the user does not necessarily have to remember to bring it with him/her) or in other forms as well. Purely by way of example, the mobile device 10 is represented in Figure 1 as a smartphone, in that the latter comprises a module 11 for generating and transmitting the warning signal 12 via Bluetooth® and preferably via BLE.

Advantageously, given that the user almost always has the smartphone (or generically the beacon) with him/her, he/she possesses a beacon to the used in the present invention.

The beacon thus emits an intermittent warning signal 12 that is propagated within a predetermined distance from the user with whom the beacon itself is associated.

Moreover, the apparatus 1 comprises a detector unit 13 for detection of the wireless warning signal 12 and that is operatively connected to the control unit 6.In particular, the detector unit 13 can be integrated in the control unit 6 or it can be external and connected (for example by means of wires or wirelessly) to the control unit 6.

In practice, the detector unit 13 is configured to detect the warning signal 12 with the aim of determining whether the mobile device 10 (and thus the user as well) is approaching the room 5 to be managed.

More specifically, the detector unit 13 is configured to:
- receive the warning signal 12 when the mobile device 10 is within the predetermined range of distance from the detector unit 13;
- generate a corresponding user presence signal 14;
- send said presence signal 14 to the control unit 6.

In practice, the presence signal 14 contains information about the detection of the warning signal 12.In addition to the warning signal 12, the detection signal can contain information about the distance of the user or other information also deducible from the signal exchange.

The control unit 6 is configured to:
- receive the presence signal 14;
- compare the contents of at least one presence signal 14 with the activation or deactivation data stored in the memory unit 17, so as to calculate the periods of the user's presence in the room 5;
- modify the activation or deactivation data previously stored in the memory unit 17, and save them again in the memory unit 17;
- generate the activation or deactivation signal 7 as a function of said modifications of the activation or deactivation data.

It should be noted that the activation or deactivation data stored in the memory unit 17 can be modified/updated after a number of presence signals 14 have been received and compared with the previously stored activation or deactivation data.

In particular, the control unit 6 is configured to generate the activation or deactivation signal 7 so as to determine time scheduling (e.g. daily or weekly) of the activation/deactivation of a system 2.

In other words, the activation or deactivation signal 7 has its own temporal pattern, which is determined by the contents of the presence signal 14 and thus by the activation or deactivation data that are updated in the memory unit 17.

Therefore, the memory unit 17 is continuously overwritten as a function of the presence of the user in the room 5 and as a result, the activation or deactivation signal 7 is updated taking these modifications into account.

In further detail, the control unit 6 comprises a processing unit configured to:
- process the presence signal 14 over time;
- store the contents of the presence signal 14;
- compare the contents of the presence signal 14 stored at different times so as to deduce the periods of the user's presence in the room 5;
- calculate said time scheduling as a function of said periods of the user's presence.

For example, this calculation can consist of the arithmetic mean of the periods of the user's presence occurring in the course of a week or a month or in other lengths of time.

It should be noted that the processing unit in the control unit 6 is configured to calculate said time scheduling taking into account the performance and response times of the management system 2.

In particular, in the preferred embodiment and as mentioned previously, the control unit 6 comprises a thermostat, which, in use, is connected to a system 4 for heating/cooling an indoor room 5. This thermostat 8 is configured to generate the signal 7 for activating or deactivating the heating/cooling system 4.

For temperature regulation, the use of wireless sensors is preferably comprised for acquisition of the temperature and humidity levels in an optimal position for the measurement thereof, with the possibility of repositioning them in the room 5 so as to locate the best position for installation.

Even more preferably, the thermostat 8 is defined by a chronothermostat 8 with time scheduling as a function of the presence of a user. Therefore, the chronothermostat 8 comprises the processing unit, which, as already mentioned, is configured to:
- process the presence signal 14;
- store the contents of the presence signal 14;
- compare the contents of the presence signal 14 stored at different times so as to deduce the periods of the user's presence in the room 5;
- calculate said time scheduling of the chronothermostat 8 as a function of these periods of the user's presence.

Hourly scheduling can be manually forced (manually switched on or off at any time), but it is possible to set protected time slots, in which the heating or cooling process follows a schedule regardless of the presence or absence of the occupants, or in which scheduling changes cannot be forced.

Moreover, the control unit 6, and preferably in the case of the chronothermostat 8, comprises an incorporated timer for measuring time and it is operatively connected to the processing unit.

In practice, the chronothermostat 8 integrates BLE technology to provide the possibility of associating one or more beacon devices in the form of small tags (e.g. keychains, stickers, etc.) that enable localization of the user in the room 5 to be controlled (such as a presence sensor) with a certain level of accuracy and with distances in the range of 50/100 metres so as to enable activation of suitable self-learning algorithms to learn user habits: the system learns on its own the hourly time slots in which the room 5 is occupied. When first installed, the desired temperature level is entered, which, however, can be modified manually and simply by the user and the changes in this desired temperature are recorded so as to determine the optimal comfort level.

As an alternative or in addition to the chronothermostat 8, the control unit 6 comprises a unit 9 for managing devices/systems that are connected to the electrical system 3 for the room 5 (note that management of the electrical system 3 concerns any device/circuit connected to the electrical system 3 such as the alarm/video surveillance/access system or such like), and which, in use, is connected to electrically powered devices or systems (for example electric lighting, opening of an electric gate, activation of appliances, alarm/video surveillance/access systems, etc.). In this case, the unit is configured to generate the signal 7 for activating or deactivating one or more of the electrically powered devices.

Moreover, it should be noted that the control apparatus 1 comprises a module 15 for connecting to a data network (to a "cloud") and the control unit 6 sends a statistical signal representative of the data received by the same control unit 6, said statistical signal being sent via the connection module 15. These latter data represent the periods in which the system 2 (e.g. the boiler) is on and off and/or a building's thermal inertia and/or differences between set temperatures and detected temperatures and/or suchlike.

In other words, the control unit 6 processes the statistical data and sends these data to the data network by means of the connection module 15 connected to it.

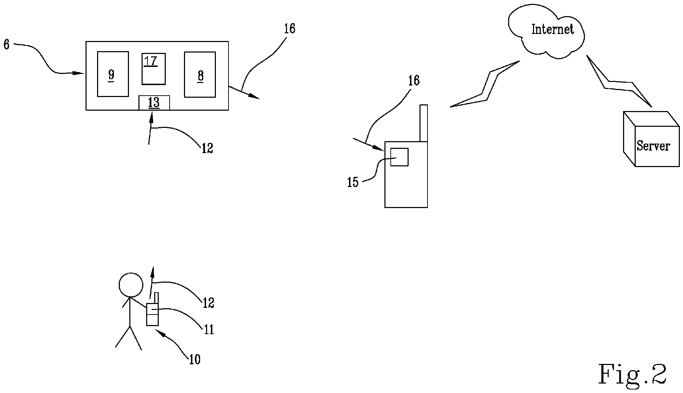

In the preferred embodiment represented in Figure 2, the connection module 15 is included in a smartphone connected (for example via Bluetooth®) to the control unit 6.In this case, the control unit 6 receives the warning signal 12 from the mobile device 10 (e.g. the beacon) wirelessly (for example via the detector unit 13), generates the statistical signal 16 and forwards it to the connection module 15 (included in the smartphone in Figure 2).

Alternatively, the connection module 15 is included in the control unit and it comprises a wireless connection to a local network access point or a connection to a data cable. In this case, the control unit 6 receives the warning signal 12 from the mobile device 10 (e.g. the beacon) wirelessly (for example via the detector unit 13), generates the statistical signal 16 and forwards it to the network via the connection module 15.

An object of the present invention is also a method for controlling a system 2 for managing a service for a user's room (5). This method is directly derived from that which is disclosed above as relates to the apparatus 1 to which full reference is made herein below.

In particular, the method comprises a step of generating and intermittently transmitting, via the mobile device 10, the wireless warning signal 12 within a predetermined range of distance from the mobile device 10. Moreover, the method comprises a step in which the detector unit 13, connected to the control unit 6, receives the wireless warning signal 12 when the mobile device 10 is within the predetermined range of distance from the detector unit 13.

Thereafter, the method comprises the generation of the user presence signal 14 by the detector unit 13 and sending this presence signal 14 to the control unit 6 so that the control unit 6 can process the contents thereof and generate the signal (7) for activating or deactivating one or more services.

In particular, the method comprises a step of generating the activation or deactivation signal 7 as a function of time-related data of the presence signal 14 concerning a predetermined length of time (e.g. a week, month, etc.). In this manner, the method provides for establishing scheduling of the control unit 6 as a function of the actual presence or absence of the user.

More precisely, the method provides for comparing the contents of said presence signal 14 with the activation or deactivation data stored in the memory unit 17, so as to deduce the periods of the user's presence in the room 5.

Thereafter, the method comprises modifying the activation or deactivation data stored in the memory unit 17, as a function of said comparison, so that the activation or deactivation signal 7 takes said modifications into account.

The present invention achieves the set aims.

Specifically, the present invention makes it possible to optimize the management of the scheduling of the thermostats and the units 9 for managing the electric power supply, in that the presence of the user in the reference room 5 is detected by means of a wireless Bluetooth® communications system at a predetermined distance. Therefore, the user is no longer required to pass in front of a sensor, and it suffices that the user has a beacon with him/her.

In this manner, it is advantageously possible to discern even when the user moves out of the room 5, but not beyond a certain distance (e.g. 50/100 metres) from the control unit 6, or if the user is leaving the room 5. It should also be noted that the present invention proves to be easily realized and that the cost for implementation of the invention is not very high.

## Claims

1. An apparatus (1) for controlling a system (2) for managing a service for a room (5) to be controlled, which can be occupied by at least one user, wherein said apparatus can be associated with a mobile signalling device possessed by a user and comprising a module (11) for generating and intermittently transmitting a wireless warning signal (12) within a predetermined range of distance from the mobile device (10), said apparatus comprising:
- a control unit (6), which, in use, is connected to the system (2) for managing the service and configured to generate a signal (7) for activating or deactivating one or more services, said control unit (6) comprising a memory unit (17) in which the data for activating or deactivating one or more services are stored, the contents of said signal (7) for activating or deactivating one or more services being a function of said data stored in the memory unit (17);
**characterised in that** it comprises:
- a detector unit (13) for detecting the wireless warning signal (12), said unit being operatively connected to the control unit (6);
said detector unit (13) being configured to:
- receive the warning signal (12) when the mobile device (10) is within the predetermined range of distance from the detector unit (13);
- generate a corresponding user presence signal (14);
- send said presence signal (14) to the control unit (6);
said control unit (6) being configured to:
- receive at least one presence signal (14);
- compare the contents of said at least one presence signal (14) with the activation or deactivation data stored in the memory unit (17), so as to deduce the periods of the user's presence in the room (5);
- modify the activation or deactivation data, previously stored in the memory unit (17), as a function of said comparison, so that the activation or deactivation signal (7) takes said modifications into account.

2. The apparatus (1) according to claim 1, **characterised in that** the control unit (6) is configured to:
- receive a plurality of presence signals (14) in succession;
- calculate the mean period of the user's presence in the room (5);
- modify the activation or deactivation data, previously stored in the memory unit (17), as a function of this calculation.

3. The apparatus (1) according to either one of the preceding claims, **characterised in that** the control unit (6) is configured to modify the activation or deactivation data previously stored in the memory unit (17) and to overwrite these data in the memory unit (17).

4. The apparatus (1) according to any one of the preceding claims, **characterised in that** the detector unit (13) for detecting the warning signal (12) is of the Bluetooth type and preferably Bluetooth® Low Energy.

5. The apparatus (1) according to any one of the preceding claims, **characterised in that** the control unit (6) comprises a thermostat (8), which, in use, is connected to a system (4) for heating/cooling an indoor room (5), said thermostat (8) being configured to generate the signal (7) for activating or deactivating the heating/cooling system (4).

6. The apparatus (1) according to claim 5, **characterised in that** the thermostat (8) is defined by a chronothermostat (8) with time scheduling as a function of the presence of a user, said time scheduling being representative of the activation or deactivation data stored in the memory unit (17), said chronothermostat (8) comprising a processing unit configured to automatically calculate said time scheduling of the chronothermostat (8) as a function of the activation or deactivation data stored in the memory unit (17).

7. The apparatus (1) according to any one of the preceding claims, **characterised in that** the control unit (6) comprises a unit (9) for managing devices or systems powered by the electrical system (3) for the room (5), and which, in use, is connected to electrically powered devices, said unit being configured to generate the signal (7) for activating or deactivating one or more electrically powered devices or systems.

8. The apparatus (1) according to any one of the preceding claims, **characterised in that** it comprises a module (15) for connecting to a data network, said control unit (6) being configured to generate a statistical signal (16) also as a function of the warning signal (12) received from the mobile device (10), and to send it to the data network via the connection module (15).

9. The apparatus (1) according to claim 8, **characterised in that** the connection module (15) is comprised in a terminal external to the control unit (6) and can be connected to it wirelessly, or it is integrated within the control unit (6).

10. A method for controlling a system (2) for managing a service for a room (5) to be controlled, which can be occupied by at least one user, wherein a mobile device (10) generates and intermittently transmits a wireless warning signal (12) within a predetermined range of distance from the mobile device (10), said method comprising the following operating steps:
- storing activation or deactivation data for one or more services in a memory unit (17);
- generating a signal (7) for activating or deactivating one or more of said services through a control unit (6), which, in use, is connected to the system (2), wherein the contents of said signal (7) for activating or deactivating one or more services are a function of said data stored in the memory unit (17);
**characterised in that** it comprises the steps in which:
- a detector unit (13), connected to the control unit (6), receives the wireless warning signal (12) when the mobile device (10) is within the predetermined range of distance from the detector unit (13);
- the detector unit (13) generates a corresponding user presence signal (14);
- said presence signal (14) is sent to the control unit (6);
- the contents of said presence signal (14) are compared with the activation or deactivation data stored in the memory unit (17) so as to deduce the periods of the user's presence in the room (5);
- the activation or deactivation data stored in the memory unit (17) are modified, as a function of said comparison, so that the activation or deactivation signal (7) takes said modifications into account.

11. The method according to claim 10, **characterised in that** it comprises the following steps in which:
- the control unit (6) receives a plurality of presence signals (14) in succession;
- the mean period of the user's presence in the room (5) is calculated;
- the activation or deactivation data previously stored in the memory unit (17) are modified, as a function of this calculation.

12. The method according to claim 10 or 11, **characterised in that** the control unit (6) is configured to modify the activation or deactivation data previously stored in the memory unit (17) and to overwrite these data in the memory unit (17).
